# EUROPEAN PATENT APPLICATION

(11) **EP 4 369 432 A1**
(43) Date of publication of application: **15.05.2024**
(21) Application number: 23185405.0
(22) Date of filing: 13.07.2023
(51) Int. Cl.: H01M 4/131, H01M 4/36, H01M 4/505, H01M 4/525, H01M 10/052, H01M 10/0525, C01G 53/04, C01G 53/00, H01M 4/02

(54) **POSITIVE ACTIVE MATERIAL FOR RECHARGEABLE LITHIUM BATTERY, PREPARING METHOD THEREOF AND RECHARGEABLE LITHIUM BATTERY INCLUDING THE SAME**

(30) Priority: 14.11.2022 KR 20220151814
(71) Applicant: Samsung SDI Co., Ltd., Yongin-si, Gyeonggi-do 17084 (KR)
(72) Inventor: JANG, Jungsue, 17084 Yongin-si (KR); KIM, Jinyoung, 17084 Yongin-si (KR); CHANG, Donggyu, 17084 Yongin-si (KR); SHIM, Jaeha, 17084 Yongin-si (KR); KANG, Taegeun, 17084 Yongin-si (KR)
(74) Representative: Marks & Clerk LLP

(57) **Abstract**

Disclosed are a positive active material for a rechargeable lithium battery, a preparation method thereof, and a rechargeable lithium battery including the same, the positive active material including a first positive active material including a lithium nickel-based composite oxide and including a secondary particle in which a plurality of primary particles are aggregated and a boron coating portion on the surface of the secondary particle, and a second positive active material including a lithium nickel-based composite oxide and including a single particle and a boron coating portion on the surface of the single particle, wherein the second positive active material has an uneven surface with irregularities and a flat surface without irregularities.

## Description

### BACKGROUND OF THE INVENTION

### (a) Field of the Invention

A positive active material for a rechargeable lithium battery, a preparation method thereof, and a rechargeable lithium battery including the same are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminium composite oxide, and lithium cobalt oxide are mainly used as positive active materials. However, these positive active materials have structure collapses or cracks during the repeated charges and discharges and thus problems of deteriorating a long-term cycle-life of a rechargeable lithium battery and increasing resistance and thus exhibit no satisfactory capacity characteristics. Accordingly, development of a novel positive active material securing long-term cycle-life characteristics as well as realizing high capacity and high energy density is required.

### SUMMARY OF THE INVENTION

In a mixture of a positive active material in a form of a secondary particle and a positive active material in a form of a single particle, efficiency of the single-particle positive active material is increased and performance such as initial charge/discharge efficiency and cycle-life characteristics, and battery safety of a rechargeable lithium battery including the same are improved.

In an embodiment, a positive active material for a rechargeable lithium battery includes a first positive active material including a lithium nickel-based composite oxide and including a secondary particle in which a plurality of primary particles are aggregated and a boron coating portion on the surface of the secondary particle; and a second positive active material including a lithium nickel-based composite oxide and including a single particle and a boron coating portion on the surface of the single particle, wherein the second positive active material has an uneven surface with irregularities and a flat surface without irregularities.

In another embodiment, a method for preparing a positive active material for a rechargeable lithium battery includes preparing a first nickel-based oxide in a form of a secondary particle in which a plurality of primary particles are aggregated by mixing a first nickel-based hydroxide and a lithium raw material and performing a first heat treatment; preparing a second nickel-based oxide in a form of a single particle by mixing a second nickel-based hydroxide and a lithium raw material and performing a second heat treatment; and mixing the first nickel-based oxide, the second nickel-based oxide, and a boron raw material and performing a third heat treatment.

In another embodiment, a rechargeable lithium battery includes a positive electrode including the positive active material, a negative electrode, and an electrolyte.

At least some of the above and other features of the invention are set out in the claims.

The efficiency of the positive active material in the form of a single particle is increased, and performance and battery safety, such as initial charge/discharge efficiency and cycle-life characteristics of a rechargeable lithium battery, are improved.

### BRIEF DESCRIPTION OF THE DRAWINGS

FIG. 1 is a schematic view illustrating a rechargeable lithium battery according to an embodiment.
FIG. 2 is a scanning electron microscope (SEM) photograph of the surface of the first positive active material of Example 1.
FIGS. 3 and 4 are SEM photographs of the second positive active material of Example 1.
FIG. 5 is a SEM photograph of the surface of the first positive active material of Comparative Example 1.
FIG. 6 is a SEM photograph of the second positive active material of Comparative Example 1.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Active Material

In an embodiment, a positive active material for a rechargeable lithium battery includes a first positive active material including a lithium nickel-based composite oxide, in a form of a secondary particle in which a plurality of primary particles are aggregated, and including a boron coating portion on the surface of the secondary particle, and a second positive active material including a lithium nickel-based composite oxide, in a form of a single particle, and including a boron coating portion on the surface of the single particle wherein the second positive active material has an uneven surface with irregularities and a flat surface without irregularities. Such a positive active material has a high pellet density and can realize high capacity, and thus it has high energy density, high charge/discharge efficiency, and excellent cycle-life characteristics at room temperature and high temperature.

### First Positive Active Material

The first positive active material is in a form of a polycrystal, and is in a form of a secondary particle in which at least two or more primary particles are aggregated. The first positive active material includes a boron coating portion on the surface of the secondary particle. The boron coating portion may be disposed on the whole or at least a portion of the surface of the secondary particle, and may be present on the surface of the secondary particle in a form of a continuous film or in a form of an island. Since the first positive active material includes the boron coating portion, structural collapse caused by repeated charging and discharging is effectively suppressed, and cycle-life characteristics at room temperature and high temperature may be improved.

The boron coating portion includes a boron-containing compound. The boron-containing compound may include, for example, boron oxide, lithium borate, or a combination thereof, and examples thereof may include B₂O₂, B₂O₃, B₄O₃, B₄O₅, LiBO₂, Li₃B₇O₁₂, Li₆B₄O₉, Li₃B₁₁O₁₈, Li₂B₄O₇, Li₃BO₃, or a combination thereof.

A boron content relative to the total content of elements other than lithium and oxygen in the first positive active material may be about 0.01 mol% to about 3 mol%, for example, about 0.01 mol% to about 2 mol%, about 0.01 mol% to about 1 mol%, or about 0.05 mol% to about 0.5 mol%. In addition, the boron content relative to the total content of elements other than lithium and oxygen in the entire first positive active material may be about 0.01 wt% to about 3 wt%, for example, about 0.01 wt% to about 2 wt%, about 0.01 wt% to about 1 wt%, or about 0.01 wt% to about 0.5 wt%. The boron content may be measured through, for example, ICP (Inductively Coupled Plasma) emission spectroscopy. When the boron is coated with such an amount, it does not act as a resistance and the battery capacity does not decrease, the diffusion of lithium ions into the positive active material becomes easier, so the initial charge/discharge efficiency is improved, and problems caused by repeated charge and discharge are suppressed, improving long-term cycle-life characteristics.

A thickness of the boron coating portion in the first positive active material is variable depending on the firing temperature at the time of coating, and may be, for example, about 1 nm to about 2 µm, about 1 nm to about 1.5 µm, about 1 nm to about 1 µm, about 1 nm to about 900 nm, about 1 nm to about 700 nm, about 1 nm to about 500 nm, about 1 nm to about 300 nm, about 5 nm to about 100 nm, or about 5 nm to about 50 nm. In this case, the rechargeable lithium battery including the first positive active material may exhibit excellent cycle-life characteristics at room temperature and high temperature. The thickness of the boron coating portion may be measured by TOF-SIMS, XPS, or EDS, and may be measured, for example, by TEM-EDS line profile.

An average particle diameter of the first positive active material, that is, an average particle diameter of the secondary particles may be about 5 µm to about 25 µm. For example, it may be about 7 µm to about 25 µm, about 10 µm to about 25 µm, about 15 µm to about 25 µm, or about 10 µm to about 20 µm. The average particle diameter of the secondary particles of the first positive active material may be greater than the average particle diameter of the second positive active material in a form of a single particle, which will be described later. The positive active material according to an embodiment may be a mixture of a first positive active material that is polycrystalline and large particles and a second positive active material that is single and small particles, thereby improving the mixture density and implementing high capacity and high energy density.

The first positive active material is a nickel-based positive active material, and includes lithium nickel-based composite oxide (or first nickel-based oxide). The nickel content in the lithium nickel-based composite oxide may be greater than or equal to about 30 mol%, for example, greater than or equal to about 40 mol%, greater than or equal to about 50 mol%, greater than or equal to about 60 mol%, greater than or equal to about 70 mol%, greater than or equal to about 80 mol%, or greater than or equal to about 90 mol%, and less than or equal to about 99.9 mol%, or less than or equal to about 99 mol% based on the total amount of metals excluding lithium. For example, the nickel content in the lithium nickel-based composite oxide may be higher than the content of each of other metals such as cobalt, manganese, and aluminium. When the nickel content satisfies the above range, the positive active material may exhibit excellent battery performance while realizing high capacity.

The first positive active material may specifically include a lithium nickel-based composite oxide represented by Chemical Formula 1.

[Chemical Formula 1] Liₐ₁Niₓ₁M¹_{y1}M²_{z1}O_{2-b1}X_{b1}

In Chemical Formula 1, 0.9≤×a1≤1.8, 0.3≤x1≤1, 0≤y1≤0.7, 0≤z1≤0.7, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S.

In Chemical Formula 1, for example, 0.4≤x1≤1 and 0≤y1≤0.6 and 0≤z1≤0.6; 0.5≤x1≤1 and 0≤y1≤0.5 and 0≤z1≤0.5; 0.6≤x1≤1 and 0≤y1≤0.4 and 0≤z1≤0.4; 0.7≤x1≤1 and 0≤y1≤0.3 and 0≤z1≤0.3; 0.8≤x1≤1 and 0≤y1≤0.2 and 0≤z1≤0.2; or 0.9≤x1≤1 and 0≤y1≤0.1 and 0≤z1≤0.1.

The first positive active material may include, for example, a lithium nickel-based composite oxide represented by Chemical Formula 2.

[Chemical Formula 2] Liₐ₂Niₓ₂Co_{y2}M³_{z2}O_{2-b2}X_{b2}

In Chemical Formula 2, 0.9≤a2≤1.8, 0.3≤x2<1, 0<y2≤0.7, 0≤z2≤0.7, 0.9≤x2+y2+z2≤1.1, 0≤b2≤0.1, M³ is at least one element selected from Al, B, Ba, Ca, Ce, Cr, Cu, Fe, Mg, Mn, Mo, Nb, Si, Sr, Ti, V, W, and Zr, and X is at least one element selected from F, P, and S.

In Chemical Formula 2, for example, 0.3≤x2≤0.99 and 0.01≤y2≤0.7 and 0.01≤z2≤0.7; 0.4≤x2≤0.99 and 0.01≤y2≤0.6 and 0.01≤z2≤0.6; 0.5≤x2≤0.99 and 0.01≤y2≤0.5 and 0.01≤z2≤0.5; 0.6≤x2≤0.99 and 0.01≤y2≤0.4 and 0.01≤z2≤0.4; 0.7≤x2≤0.99 and 0.01≤y2≤0.3 and 0.01≤z2≤0.3; 0.8≤x2≤0.99 and 0.01≤y2≤0.2 and 0.01≤z2≤0.2; or 0.9≤x2≤0.99 and 0.01≤y2≤0.1 and 0.01≤z2≤0.1.

The first positive active material may include, for example, a compound of Chemical Formula 3.

[Chemical Formula 3] Liₐ₃Niₓ₃CO_{y3}M⁴_{z3}M⁵_{w3}O_{2-b3}X_{b3}

In Chemical Formula 3, 0.9≤a3≤1.8, 0.3≤x3≤0.98, 0.01≤y3≤0.69, 0.01≤z3≤0.69, 0≤w3≤0.69, 0.9≤x3+y3+z3+w3≤1.1, 0≤b3≤0.1, M⁴ is at least one element selected from Al and Mn, M⁵ is at least one element selected from B, Ba, Ca, Ce, Cr, Cu, Fe, Mg, Mo, Nb, Si, Sr, Ti, V, W, and Zr, and X is at least one element selected from F, P, and S.

In Chemical Formula 3, for example, 0.4≤x3≤0.98, 0.01≤y3≤0.59, 0.01≤z3≤0.59, and 0≤w3≤0.59; 0.5≤x3≤0.98, 0.01≤y3≤0.49, 0.01≤z3≤0.49, and 0≤w3≤0.49; 0.6≤x3≤0.98, 0.01≤y3≤0.39, 0.01≤z3≤0.39, and 0≤w3≤0.39; 0.7≤x3≤0.98, 0.01≤y3≤0.29, 0.01≤z3≤0.29, and 0≤w3≤0.29; 0.8≤x3≤0.98, 0.01≤y3≤0.19, 0.01≤z3≤0.19, and 0≤w3≤0.19; or 0.9≤x3≤0.98, 0.01≤y3≤0.09, 0.01≤z3≤0.09, and 0≤w3≤0.09.

Meanwhile, a maximum roughness of the surface of the first positive active material may be, for example, about 3 nm to about 80 nm, about 5 nm to about 70 nm, or about 10 nm to about 65 nm, an average roughness thereof may be about 0.2 nm to about 5 nm, or about 0.2 nm to about 4 nm, and a root mean square roughness thereof may be about 0.5 nm to about 10 nm, about 0.5 nm to about 9 nm, about 0.5 nm to about 8 nm, or about 0.7 nm to about 7 nm. Details such as the meaning and measurement method of the maximum roughness, average roughness, and root mean square roughness will be described later in the section on the second positive active material.

### Second Positive Active Material

The second positive active material is in the form of a single particle, exists alone without a grain boundary within the particle, is composed of one particle, and has a monolith structure, a one body structure, or a non-aggregated particle, in which particles are not aggregated with each other but exist as an independent phase in terms of morphology, and may be expressed as a single particle (one body particle, single grain), for example, as a single crystal. A positive active material according to an embodiment may exhibit improved cycle-life characteristics while realizing high capacity and high energy density by including the second positive active material.

The second positive active material has no particular limit to a shape but may have various shapes such as a polyhedron, an oval, a plate, a rod, an irregular shape, and the like. The second positive active material in the form of a single particle according to an embodiment may have a polyhedral structure having two or more faces.

The second positive active material according to an embodiment includes a boron coating portion on the surface of a single particle. The boron coating part includes a boron-containing compound, and the boron-containing compound may include, for example, boron oxide, lithium borate, or a combination thereof, for example, B₂O₂, B₂O₃, B₄O₃, B₄O₅, LiBO₂, Li₃B₇O₁₂, Li₆B₄O₉, Li₃B₁₁O₁₈, Li₂B₄O₇, Li₃BO₃, or a combination thereof. Since the second positive active material is coated with a boron-containing compound, structural collapse caused by repeated charging and discharging is effectively suppressed, and cycle-life characteristics at room temperature and high temperature may be improved.

In a method of preparing the positive active material according to an embodiment, which will be described later, the first positive active material and the second positive active material are not individually coated with boron, but the first nickel-based oxide and the second nickel-based oxide are mixed with the boron raw material and then, simultaneously coated (or simultaneously fired) through a third heat treatment

According to this method, the boron-containing compound is effectively coated only on a portion of the crystal surfaces of the second positive active material in the form of single particles and thus generates irregularities only on this portion. Accordingly, one single particle of the second positive active material includes both an uneven surface having a rugged shape due to the irregularities having a specific shape and a flat or smooth surface. The reason is that the irregularities are generated as the boron-containing compound is effectively coated only on the crystal surface where lithium ions are easily intercalated and deintercalated. This second positive active material exhibits an increase in surface roughness on a specific surface, resulting in increasing an overall specific surface area of the second positive active material and thus that of a positive active material including the same. Therefore, a rechargeable lithium battery including this positive active material may achieve improved initial discharge capacity, charge/discharge efficiency, and cycle-life characteristics.

The irregularities on the uneven surface have no layered or stepped structure during the formation of the single-particle lithium nickel-based composite oxide but a form of water drops, wrinkles, or pillars lying down and aligned in parallel which are formed by the boron-containing compound coated, that is, attached onto the surface of the single particle. The boron-containing compound may be expressed to cover in a rugged shape a portion of the surface of the single particle. This shape is distinguished from a conventional island-type coating.

One single particle of the second positive active material may include an uneven surface having high surface roughness and a flat surface having low surface roughness. In other words, in the second positive active material, the uneven surface has high surface roughness. The surface roughness may be measured with a surface roughness meter, for example, an optical profiler with respect to a photograph taken with an atomic force microscope (AFM) and the like.

Maximum roughness (Rₘₐₓ; peak to peak height; maximum roughness depth) out of the surface roughness may mean a vertical distance between the highest peak and the lowest valley of a roughness cross-section curve (roughness profile). Average roughness (Rₐ) is also called to be center line average roughness and may mean an arithmetic mean of an absolute value of an ordinate (a length from a center line to a peak) of the roughness profile. Root mean square roughness (R_{q}) may mean a root mean square (rms) of the ordinate in the roughness profile. Regarding this surface roughness, refer to a parameter definition and a measurement method described in KS B 0601 or ISO 4287/1.

The uneven surface of the second positive active material may have a maximum roughness (Rₘₐₓ; peak to peak height) of greater than or equal to about 15 nm, for example, greater than or equal to about 16 nm, about 15 nm to about 100 nm, about 15 nm to about 80 nm, about 15 nm to about 60 nm, or about 15 nm to about 40 nm. In this case, the positive active material for a rechargeable lithium battery including the second positive active material may exhibit high energy density and high capacity, and may realize excellent charge/discharge efficiency and cycle-life characteristics.

The uneven surface of the second positive active material may have an average roughness (Rₐ) of greater than or equal to about 1.2 nm, for example, greater than or equal to about 1.3 nm, about 1.2 nm to about 10 nm, about 1.2 nm to about 8.0 nm, about 1.2 nm to about 6.0 nm, about 1.2 nm to about 5.0 nm, or about 1.2 nm to about 3.0 nm. In this case, the positive active material for a rechargeable lithium battery including the second positive active material may exhibit high energy density and high capacity, and may realize excellent charge/discharge efficiency and cycle-life characteristics.

The uneven surface of the second positive active material may have a root mean square roughness (R_{q}) of greater than or equal to about 1.5 nm, for example, greater than or equal to about 1.6 nm, about 1.5 nm to about 10 nm, about 1.5 nm to about 8 nm, about 1.5 nm to about 6 nm, about 1.5 nm to about 5 nm, or about 1.5 nm to about 3 nm. In this case, the positive active material for a rechargeable lithium battery including the second positive active material may exhibit high energy density and high capacity, and may realize excellent charge/discharge efficiency and cycle-life characteristics.

On the other hand, the flat surface of the second positive active material may exhibit lower surface roughness than the uneven surface. For example, the flat surface of the second positive active material may have a maximum roughness (Rₘₐₓ) of less than or equal to about 14 nm, for example, about 0.1 nm to about 14 nm, or about 1 nm to about 10 nm. In addition, the average roughness (Rₐ) of the flat surface of the second positive active material may be less than about 1.2 nm, for example, about 0.1 nm to about 1.19 nm, or about 0.5 nm to about 1.18 nm. The flat surface of the second positive active material may have a root mean square roughness (R_{q}) of less than about 1.5 nm, for example, about 0.1 nm to about 1.4 nm, or about 0.5 nm to about 1.4 nm.

As such, the second positive active material including both the uneven surface and flat surfaces may have a stable structure without collapsing according to charging and discharging of the battery while realizing high capacity and high energy density, and may exhibit excellent cycle-life characteristics.

The boron content relative to the total content of elements other than lithium and oxygen in the second positive active material may be about 0.01 mol% to about 3 mol%, for example, about 0.01 mol% to about 2 mol%, about 0.01 mol% to about 1 mol%, or about 0.05 mol% to about 0.5 mol%. In addition, the boron content relative to the total content of elements other than lithium and oxygen in the entire second positive active material may be about 0.01 wt% to about 3 wt%, for example, about 0.01 wt% to about 2 wt%, about 0.01 wt% to about 1 wt%, or about 0.01 wt% to about 0.5 wt%. The boron content may be measured through, for example, ICP (Inductively Coupled Plasma) emission spectroscopy. When the boron is coated with such an amount, it does not act as resistance, does not reduce battery capacity, and maximizes the performance of the second positive active material in the form of a single particle.

A ratio of the uneven surface to the total surface area of the second positive active material may be approximately about 40% to about 80%, for example, about 45% to about 80%, or about 50% to about 75%. In addition, a ratio of the flat surface to the total surface area of the second positive active material may be approximately about 20% to about 60%, for example, about 20% to about 55%, or about 25% to about 50%. By including the uneven surface and the flat surface at such a ratio, the second positive active material may exhibit high cycle-life characteristics while realizing high capacity.

A thickness of the boron coating portion in the second positive active material may be about 1 nm to about 2 µm, for example, about 1 nm to about 1 µm, about 1 nm to about 900 nm, about 1 nm to about 700 nm, about 1 nm to about 500 nm, about 1 nm to about 300 nm, about 5 nm to about 100 nm, or about 5 nm to about 50 nm. In this case, the rechargeable lithium battery including the second positive active material may exhibit excellent cycle-life characteristics at room temperature and high temperature. The thickness of the boron coating portion may be measured by TOF-SIMS, XPS, or EDS, and may be measured, for example, by TEM-EDS line profile.

An average particle diameter of the second positive active material, that is, an average particle diameter of a single particle may be about 0.05 µm to about 10 µm, for example, about 0.1 µm to about 8 µm, 0.5 µm to about 9 µm, about 1 µm to about 8 µm, about 0.1 µm to about 7 µm, about 0.1 µm to about 6 µm, about 0.1 µm to about 10 µm, or specifically about 1 µm to about 5 µm. The particle diameter of the second positive active material may be smaller than that of the first positive active material, and accordingly, the density of the positive active material may be further increased.

A BET specific surface area of the entire positive active material including the first positive active material and the second positive active material may be about 0.2 m²/g to about 0.6 m²/g, for example, about 0.3 m²/g to about 0.5 m²/g, about 0.3 m²/g to about 0.4 m²/g. In this case, the positive active material may realize excellent charge/discharge efficiency and cycle-life characteristics. The BET specific surface area may be measured by a nitrogen gas adsorption method using, for example, a specific surface area measuring device HM model-1208 manufactured by MOUNTECH. Specifically, about 0.3 g of the positive active material sample is heated in a preprocessor in a nitrogen atmosphere at 300 °C for 1 hour, is additionally pre-treated at 300 °C for 15 minutes in a specific surface area measuring device, and then is cooled to the temperature of liquid nitrogen and saturation-adsorbed with a gas of 30% nitrogen and 70% He. Thereafter, the amount of gas desorbed by heating to room temperature is measured, and the specific surface area may be calculated from the obtained result by the usual BET method.

The second positive active material includes lithium nickel-based composite oxide (or second nickel-based oxide) as a nickel-based active material. The nickel content in the lithium nickel-based composite oxide may be greater than or equal to about 30 mol%, for example, greater than or equal to about 40 mol%, greater than or equal to about 50 mol%, greater than or equal to about 60 mol%, greater than or equal to about 70 mol%, greater than or equal to about 80 mol% or more, or greater than or equal to about 90 mol%, and less than or equal to about 99.9 mol%, or less than or equal to about 99 mol% based on the total amount of metals other than lithium. For example, the nickel content in the lithium nickel-based composite oxide may be higher than the content of each of other metals such as cobalt, manganese, and aluminium. When the nickel content satisfies the above range, the positive active material may exhibit excellent battery performance while realizing high capacity.

The second positive active material may include, for example, a lithium nickel-based composite oxide represented by Chemical Formula 11.

[Chemical Formula 11] Liₐ₁₁Niₓ₁₁M¹¹_{y11}M¹²_{z11}O_{2-b11}X_{b11}

In Chemical Formula 11, 0.9≤a11≤1.8, 0.3≤x11≤1, 0≤y11≤0.7, 0≤z11≤0.7, 0.9≤x11+y11+z11≤1.1, 0≤b11≤0.1, M¹¹ and M¹² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S.

In Chemical Formula 11, for example, 0.4≤x11≤1, 0≤y11≤0.6, and 0≤z11≤0.6; 0.5≤x11≤1, 0≤y11≤0.5, and 0≤z11≤0.5; 0.6≤x11≤1, 0≤y11≤0.4, and 0≤z11≤0.4; 0.7≤x11≤1, 0≤y11≤0.3, and 0≤z11≤0.3; 0.8≤x11≤1, 0≤y11≤0.2, and 0≤z11≤0.2; or 0.9≤x11≤1, 0≤y11≤0.1, and 0≤z11≤0.1.

The second positive active material may include, for example, a lithium nickel-based composite oxide represented by Chemical Formula 12.

[Chemical Formula 12] Liₐ₁₂Niₓ₁₂Co_{y12}M¹³_{z12}O_{2-b12}X_{b12}

In Chemical Formula 12, 0.9≤a12≤1.8, 0.3≤x12<1, 0<y12≤0.7, 0≤z12≤0.7, 0.9≤x12+y12+z12≤1.1, 0≤b12≤0.1, M¹³ is at least one element selected from Al, B, Ba, Ca, Ce, Cr, Cu, Fe, Mg, Mn, Mo, Nb, Si, Sr, Ti, V, W, and Zr, and X is at least one element selected from F, P, and S.

In Chemical Formula 12, for example, 0.3≤x12≤0.99, 0.01≤y12≤0.7, and 0≤z12≤0.7; 0.4≤x12≤0.99, 0.01≤y12≤0.6, and 0≤z12≤0.6; 0.5≤x12≤0.99, 0.01≤y12≤0.5, and 0≤z12≤0.5; 0.6≤x12≤0.99, 0.01≤y12≤0.4, and 0≤z12≤0.4; 0.7≤x12≤0.99, 0.01≤y12≤0.3, and 0≤z12≤0.3; 0.8≤x12≤0.99, 0.01≤y12≤0.2, and 0≤z12≤0.2; or 0.9≤x12≤0.99, 0.01≤y12≤0.1, and 0≤z12≤0.1.

As a specific example, the second positive active material may include lithium nickel cobalt composite oxide represented by Chemical Formula 13.

[Chemical Formula 13] Liₐ₁₃Niₓ₁₃Co_{y13}M¹⁴_{z13}M¹⁵_{w13}O_{2-b13}X_{b13}

In Chemical Formula 13, 0.9≤a13≤1.8, 0.3≤x13≤0.98, 0.01≤y13≤0.69, 0.01≤z13≤0.69, 0≤w13≤0.69, 0.9≤x13+y13+z13+w13≤1.1, 0≤b13≤0.1, M¹⁴ is at least one element selected from Al and Mn, and M¹⁵ is at least one element selected from B, Ba, Ca, Ce, Cr, Cu, Fe, Mg, Mo, Nb, Si, Sr, Ti, V, W, and Zr.

In Chemical Formula 13, for example, 0.4≤x13≤0.98, 0.01≤y13≤0.59, 0.01≤z13≤0.59, and 0≤w13≤0.59; 0.5≤x13≤0.98, 0.01≤y13≤0.49, 0.01≤z13≤0.49, and 0≤w13≤0.49; 0.6≤x13≤0.98, 0.01≤y13≤0.39, 0.01≤z13≤0.39, and 0≤w13≤0.39; 0.7≤x13≤0.98, 0.01≤y13≤0.29, 0.01≤z13≤0.29, and 0≤w13≤0.29, 0.8≤x13≤0.98, 0.01≤y13≤0.19, 0.01≤z13≤0.19, and 0≤w13≤0.19; or 0.9≤x13≤0.98, 0.01≤y13≤0.09, 0.01≤z13≤0.09, and 0≤w13≤0.09.

In the positive active material according to an embodiment, the first positive active material may be included in an amount of about 50 wt% to about 90 wt%, and the second positive active material may be included in an amount of about 10 wt% to about 50 wt% based on the total amount of the first positive active material and the second positive active material. The first positive active material may be, for example, included in an amount of about 60 wt% to about 90 wt%, or about 70 wt% to about 90 wt% and the second positive active material may be, for example, included in an amount of about 10 wt% to about 40 wt%, or about 10 wt% to about 30 wt%. When the content ratio of the first positive active material and the second positive active material is as described above, the positive active material including the same may realize high capacity, improve a mixture density, and exhibit high energy density.

The boron content relative to the total content of elements other than lithium and oxygen in the entire positive active material including the first positive active material and the second positive active material may be about 0.01 mol% to about 3 mol%, for example, about 0.01 mol% to about 2 mol%, about 0.01 mol% to about 1 mol%, or about 0.05 mol% to about 0.5 mol%. In addition, the boron content relative to the total content of elements other than lithium and oxygen in the entire positive active material may be about 0.01 wt% to about 3 wt%, for example, about 0.01 wt% to about 2 wt%, about 0.01 wt% to about 1 wt%, or about 0.01 wt% to about 0.5 wt%. The boron content may be measured through, for example, ICP (Inductively Coupled Plasma) emission spectroscopy. When the boron is coated with such an amount, it does not act as resistance and does not reduce battery capacity, and by maximizing the performance of each of the first positive active material and the second positive active material, capacity characteristics and cycle-life characteristics may be simultaneously improved.

### Method of Preparing Positive Active Material

In an embodiment, a method for preparing a positive active material for a rechargeable lithium battery includes preparing a first nickel-based oxide by mixing a first nickel-based hydroxide and a lithium raw material and performing a first heat treatment, preparing a second nickel-based oxide by mixing a second nickel-based hydroxide and a lithium raw material and performing a second heat treatment, and mixing the first nickel-based oxide, the second nickel-based oxide, and a boron raw material and subjecting to a third heat treatment to obtain a final positive active material including the first positive active material and the second positive active material.

Herein, the first nickel-based oxide and the first positive active material are in the form of secondary particles in which a plurality of primary particles are aggregated, and the second nickel-based oxide and the second positive active material are in the form of single particles. The first positive active material is a material that a boron-containing compound is coated on the surface of the first nickel-based oxide, and the second positive active material is a material that a boron-containing compound is coated on the surface of the second nickel-based oxide.

In an embodiment, instead of individually boron-coating the first positive active material and the second positive active material, the boron coating is simultaneously performed in a state of mixing the first nickel-based oxide and the second nickel-based oxide. According to this method, the second positive active material in the form of single particles has both an uneven surface having a rugged shape due to the coated boron-containing compound and a flat surface, resultantly having high surface roughness and a high specific surface area. Accordingly, a positive active material for a rechargeable lithium battery including this second positive active material exhibits a high specific surface area and excellent capacity and cycle-life characteristics.

The first nickel-based hydroxide and the second nickel-based hydroxide are precursors of the positive active materials and may be independently a nickel hydroxide or a nickel-based composite hydroxide including other elements in addition to nickel, a nickel metal composite hydroxide including other elements in addition to nickel, or a nickel-transition metal composite hydroxide including other elements in addition to nickel.

For example, the first nickel-based hydroxide and the second nickel-based hydroxide may each independently be represented by Chemical Formula 21.

[Chemical Formula 21] Niₓ₂₁M²¹_{y21}M²²_{z21}(OH)₂

In Chemical Formula 21, 0.3≤x21≤1, 0≤y21≤0.7, 0≤z21≤0.7, 0.9≤x21+y21+z21≤1.1, and M²¹ and M²² are each independently at least one element selected from Al, B, Ba, Ca, Ce, Co, Cr, Cu, F, Fe, Mg, Mn, Mo, Nb, P, S, Si, Sr, Ti, V, W, and Zr.

A particle diameter of the first nickel-based hydroxide may be about 10 µm to about 30 µm, for example, about 10 µm to about 25 µm, about 15 µm to about 25 µm, or about 10 µm to about 20 µm. A particle diameter of the second nickel-based hydroxide may be about 1 µm to about 9 µm, for example, about 2 µm to about 9 µm, about 2 µm to about 8 µm, or about 3 µm to about 7 µm.

The lithium raw material may be, for example, Li₂CO₃, LiOH, a hydrate thereof, or a combination thereof as a source of lithium for the positive active material.

When the first nickel-based hydroxide and the lithium raw material are mixed, a ratio of the number of moles of lithium in the lithium raw material to the number of moles of metal in the first nickel-based hydroxide may be, for example, greater than or equal to about 0.8, greater than or equal to about 0.85, greater than or equal to about 0.9, greater than or equal to about 0.95, or greater than or equal to about 1.0, and less than or equal to about 1.8, less than or equal to about 1.5, less than or equal to about 1.2, less than or equal to about 1.1, or less than or equal to about 1.05.

The first heat treatment may be performed in an oxidizing gas atmosphere, for example, in an oxygen atmosphere or an air atmosphere. In addition, the first heat treatment may be performed at about 600 °C to about 900 °C or about 600 °C to about 800 °C, for example, for about 5 to about 20 hours or about 5 to about 15 hours. The first nickel-based oxide obtained through the first heat treatment may also be referred to as a first lithium nickel-based oxide.

When the second nickel-based hydroxide and the lithium raw material are mixed, a ratio of the number of moles of lithium in the lithium raw material to the number of moles of metal in the second nickel-based hydroxide may be, for example, greater than or equal to about 0.8, greater than or equal to about 0.85, greater than or equal to about 0.9, greater than or equal to about 0.95, or greater than or equal to about 1.0, and less than or equal to about 1.8, less than or equal to about 1.5, less than or equal to about 1.2, less than or equal to about 1.1, or less than or equal to about 1.05.

The second heat treatment may also be performed in an oxidizing gas atmosphere, for example, in an oxygen atmosphere or an air atmosphere. In addition, the second heat treatment may be performed at, for example, about 800 °C to about 1100 °C, or about 900 °C to about 1000 °C, and may be performed for, for example, about 5 to about 20 hours or about 5 to about 15 hours. The second nickel-based oxide obtained through the second heat treatment may be referred to as a second lithium nickel-based oxide.

The method for preparing a positive active material for a rechargeable lithium battery may further include pulverizing a product obtained from the second heat treatment after mixing the second nickel-based hydroxide and the lithium raw material and performing the second heat treatment, obtaining a second nickel-based oxide in the form of single particles. The pulverization may be performed by using various pulverizing devices such as a jet mill and the like. Herein, the pulverization of the product is a process of obtaining an active material in the form of single particles, which is distinguished from a general crushing process of an active material.

In the process of mixing the first nickel-based oxide and the second nickel-based oxide, a weight ratio of the first nickel-based oxide and the second nickel-based oxide may be about 9:1 to about 5:5, for example, about 9:1 to about 6:4, or about 8:2 to about 7:3. When the first nickel-based oxide and the second nickel-based oxide satisfy the aforementioned mixing ratio range, the positive active material may exhibit high capacity and high energy density and, in addition, high electrode plate density.

Subsequently, the first nickel-based oxide and the second nickel-based oxide are mixed with the boron raw material, and then, a third heat treatment is performed for the boron coating. The boron coating may be performed in a dry or wet manner. For example, the first nickel-based oxide, the second nickel-based oxide, and the boron raw material may be mixed without a solvent and then, the third heat treatment may be performed for dry coating. Or, the first nickel-based oxide and the second nickel-based oxide may be added to a solvent such as distilled water and the like, while washed, and the boron raw material is added dropwise thereto to perform wet coating, which is followed by the third heat treatment.

The boron raw material is a boron-containing compound, for example, H₃BO₃, HBO₂, B₂O₃, C₆H₅B(OH)₂, (C₆H₅O)₃B, [CH₃(CH₂)₃O]₃B, (C₃H₇O)₃B, C₃H₉B₃O₆, C₁₃H₁₉BO₃, or a combination thereof.

The mixing of the boron raw material may be performed such that, boron in the boron raw material is mixed to be about 0.01 parts by mole to about 3 parts by mole, about 0.01 parts by mole to about 2 parts by mole, about 0.05 parts by mole to about 1.5 parts by mole, or about 0.1 parts by mole to about 1 part by mole, when the content of metals other than lithium in the first nickel-based oxide and the second nickel-based oxide is 100 parts by mole. When the content of the boron raw material satisfies the above range, boron does not act as resistance in the positive active material and may serve to improve performance of the rechargeable lithium battery, thereby improving capacity and improving cycle-life characteristics. If the content of the boron raw material is excessive, boron acts as a resistance in the positive active material, which may decrease the capacity and cycle-life of the battery.

In an embodiment, the lithium raw material may be mixed together when mixing the first nickel-based oxide, the second nickel-based oxide, and the boron raw material. The lithium raw material may be lithium hydroxide, lithium carbonate, or hydrates thereof. At this time, the input amount of the lithium raw material may be about 0.1 parts by mole to about 10 parts by mole, about 0.5 parts by mole to about 8 parts by mole, or about 1 part by mole to about 6 parts by mole, based on 100 parts by mole of the metals other than lithium in the total of the first nickel-based oxide and the second nickel-based oxide. In this way, when the third heat treatment is performed by adding the lithium raw material together, a stable boron coating portion on the surface of the nickel-based oxide may be effectively formed and a form of the second positive active material according to an embodiment may be formed.

The third heat treatment may be performed under an oxidizing gas atmosphere such as an oxygen or air atmosphere and the like. In addition, the third heat treatment may be performed, for example, at about 650 °C to about 900 °C or about 650 °C to about 800 °C. The third heat treatment may be performed, for example, for about 5 hours to about 30 hours or about 10 hours to about 24 hours, which may vary depending on the heat treatment temperature and the like.

Subsequently, when the heat treatment is completed, a product therefrom is cooled to room temperature, preparing the positive active material for a rechargeable lithium battery according to an embodiment. The prepared positive active material is in a mixture state of the first positive active material in the form of secondary particles in which primary particles are aggregated and the second positive active material in the form of single particles, wherein the first positive active material and the second positive active material are respectively coated with the boron-containing compound, and the second positive active material includes both uneven surface and flat surface.

### Positive Electrode

The positive electrode for a rechargeable lithium battery includes a current collector and a positive active material layer on the current collector. The positive active material layer includes a positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% based on the total weight of the positive active material layer.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The content of the conductive material in the positive active material layer may be about 1 wt% to about 5 wt% based on the total weight of the positive active material layer.

An aluminium foil may be used as the positive electrode current collector, but is not limited thereto.

### Negative Electrode

A negative electrode for a rechargeable lithium battery includes a current collector and a negative active material layer on the current collector. The negative active material layer includes a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative active material. The crystalline carbon may be irregular, sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, an Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be about 0.1 parts by weight to about 3 parts by weight based on 100 parts by weight of the negative active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

### Rechargeable Lithium Battery

Another embodiment provides a rechargeable lithium battery including a positive electrode, a negative electrode, a separator between the positive electrode and the negative electrode, and an electrolyte.

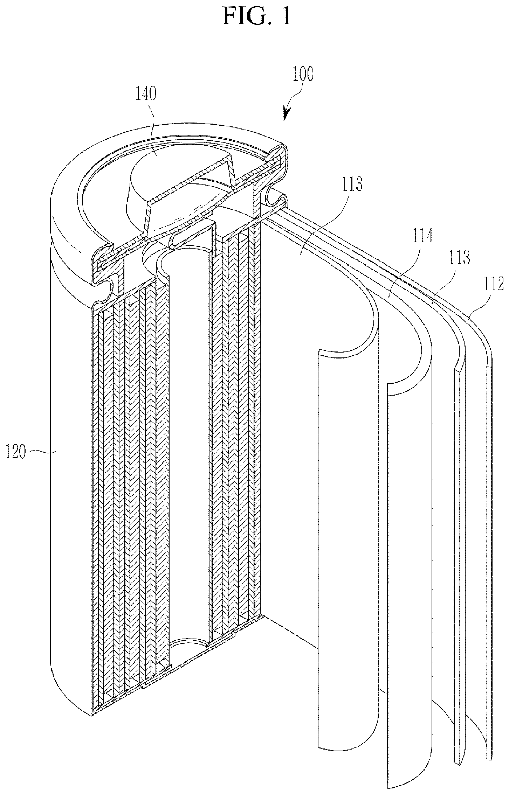

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

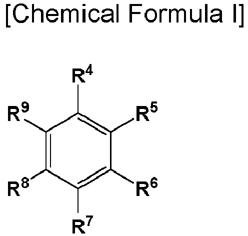

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula II in order to improve cycle-life of a battery.

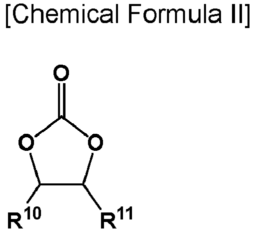

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator 113 may include a glass fiber, polyester, TEFLON, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. However, the examples are for the purpose of illustration and are not to be construed as limiting the present invention.

### Example 1

### 1. Preparation of First Nickel-based oxide in Form of Secondary Particle

### [Co-precipitation Process]

As metal raw materials, nickel sulfate (NiSO₄·6H₂O), cobalt sulfate (CoSO₄·7H₂O), and manganese sulfate (MnSO₄·H₂O) in a mole ratio of 95:4:1 were dissolved in distilled water as a solvent to prepare a mixed solution, and in order to form a complex compound, ammonia water (NH₄OH) and sodium hydroxide (NaOH) as a precipitant were prepared.

In a continuous reactor, after putting an ammonia water diluted solution, the metal raw material mixed solution was continuously added thereto, and the sodium hydroxide was added to maintain pH inside the reactor. When a reaction slowly proceeded for about 80 hours and stabilized, a product overflown therefrom was collected and then, washed and dried, obtaining a final precursor. Accordingly, a first nickel-based hydroxide (Ni_{0.95}Co_{0.04}Mn_{0.01}(OH)₂) in the form of secondary particles in which primary particles are aggregated was obtained.

### [Oxidation Process]

The obtained first nickel-based hydroxide (Ni_{0.95}Co_{0.04}Mn_{0.01}(OH)₂) was mixed with LiOH to have 1.04 of a mole ratio of lithium to a total amount of transition metals, and then, a first heat treatment was performed under an oxygen atmosphere at about 750 °C for 15 hours, obtaining a first nickel-based oxide (LiNi_{0.95}Co_{0.04}Mn_{0.01}O₂). The obtained first nickel-based oxide had an average particle diameter of about 15 µm and was in the form of secondary particles in which primary particles are aggregated.

### 2. Preparation of Second Nickel-based oxide in Form of Single Particle

### [Co-precipitation Process]

Nickel sulfate (NiSO₄·6H₂O), cobalt sulfate (CoSO₄·7H₂O), and manganese sulfate (MnSO₄·H₂O) were dissolved in distilled water as a solvent to prepare a mixed solution. In order to form a complex, an ammonia water (NH₄OH) diluent and sodium hydroxide (NaOH) as a precipitant were prepared. Subsequently, the raw metal material mixed solution, the ammonia water, and the sodium hydroxide were each put into a reactor. While stirred, a reaction proceeded for about 20 hours. Subsequently, the slurry solution in the reactor was filtered, washed with distilled water with high purity, and dried for 24 hours, obtaining a second nickel-based hydroxide (Ni_{0.94}Co_{0.05}Mn_{0.01}(OH)₂) powder. The obtained second nickel-based hydroxide powder had an average particle diameter of about 4.0 µm and a specific surface area of about 15 m²/g, which was measured in a BET method.

### [Oxidation Process]

The obtained second nickel-based hydroxide and LiOH were mixed to satisfy Li/(Ni+Co+Mn) = 1.05 and then, put in a firing furnace to perform a second heat treatment under an oxygen atmosphere at 910 °C for 8 hours. Subsequently, a product therefrom was pulverized for about 30 minutes and then, separated/dispersed as second nickel-based oxides in the form of single particles. The obtained second nickel-based oxide (LiNi_{0.94}Co_{0.05}Mn_{0.01}O₂) in the form of single particles had an average particle diameter of about 3.7µm.

### 3. Preparation of Boron Coating and Final Positive Active Material

The first nickel-based oxide and the second nickel-based oxide were mixed in a weight ratio of 7:3, and this mixture and water in a weight ratio of 1:1 were washed in a stirrer and dried at 150 °C. Subsequently, 5 parts by mole of lithium hydroxide and 0.25 parts by mole of boric acid (B(OH)₃) were additionally mixed with the first nickel-based oxide and the second nickel-based oxide, based on 100 parts by mole of transition metals excluding lithium in the total nickel-based oxides and then, put in a firing furnace to perform a third heat treatment under an oxygen atmosphere at about 710 °C for 15 hours. Then, the firing furnace was cooled to room temperature, obtaining a final positive active material in which the first positive active material and the second positive active material were mixed.

In the final positive active material, the first positive active material in the form of secondary particles and the second positive active material in the form of single particles were mixed and respectively coated with a boron-containing compound.

### 4. Manufacture of Positive Electrode

95 wt% of the final positive active material, 3 wt% of a polyvinylidene fluoride binder, and 2 wt% of carbon nanotube conductive material were mixed in an N-methylpyrrolidone solvent to prepare positive active material slurry. The positive active material slurry was coated on an aluminium current collector, dried, and then compressed to manufacture a positive electrode.

### 5. Manufacture of Rechargeable Lithium Battery Cell

A coin half-cell was manufactured by disposing a separator having a polyethylene polypropylene multilayer structure between the manufactured positive electrode and lithium metal counter electrode, and injecting an electrolyte in which 1.0 M LiPF₆ lithium salt was added to a solvent in which ethylene carbonate and diethyl carbonate were mixed in a volume ratio of 50:50.

### Comparative Example 1

A positive active material and a battery cell were manufactured in the same manner as in Example 1 except that the first nickel-based oxide and the second nickel-based oxide were individually coated with boron and then, mixed instead of mixing the first nickel-based oxide and the second nickel-based oxide and then, performing the boron coating in the "3. preparation of boron coating and final positive active material" of Example 1.

The boron coating process was as follows. A first positive active material was obtained by mixing the first nickel-based oxide with 5 parts by mole of lithium hydroxide and 0.25 parts by mole of boric acid based on 100 parts by mole of all the elements excluding Li and O and then, putting the obtained mixture in a firing furnace, performing heat treatment under an oxygen atmosphere at about 700 °C for 15 hours, and cooling the furnace to room temperature. In addition, a second positive active material was prepared by mixing the second nickel-based oxide with 5 parts by mole of lithium hydroxide and 0.25 parts by mole of boric acid based on 100 parts by mole of all the elements excluding Li and O, putting the mixture in a firing furnace, and performing heat treatment under an oxygen atmosphere at about 850 °C for 15 hours, and cooling the furnace to room temperature. The first positive active material coated with a boron-containing compound and the second positive active material coated with a boron-containing compound were mixed in a weight ratio of 7:3, preparing a final positive active material according to Comparative Example 1.

### Evaluation Example 1: Observation of Surface of Positive Active Material

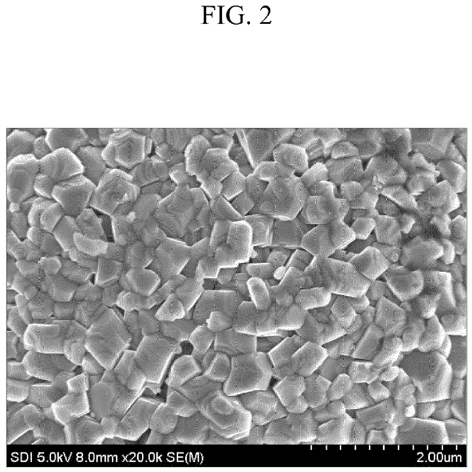

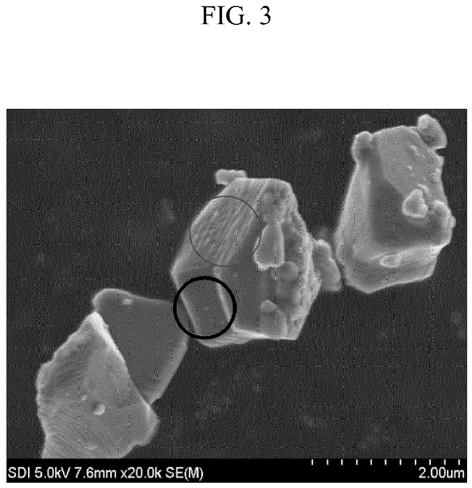

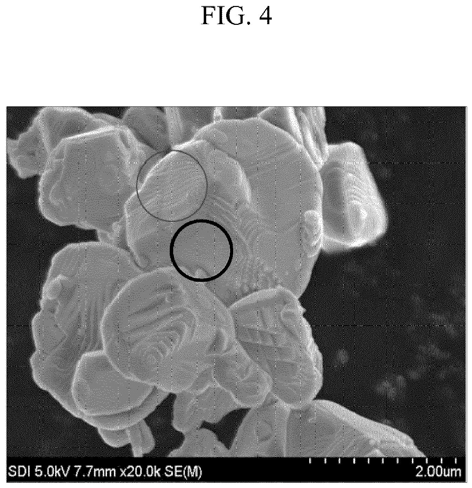

In the final positive active material according to Example 1, an SEM photograph of the first positive active material is shown in FIG. 2, and an SEM photograph of the second positive active material is shown in FIGS. 3 and 4. Referring to FIG. 2, the second positive active material is in the form of secondary particles in which a plurality of primary particles are aggregated and exhibits no change in surface roughness after the boron coating. Referring to FIGS. 3 and 4, the second positive active material in the form of single particles, wherein a portion marked by a thin circle out of the single particle surface is a portion coated with the boron-containing compound, which generates irregularities on the surface and significantly increases surface roughness, and another portion marked by a thick circle is a portion coated with no boron-containing compound and has a smooth and flat surface and increases no surface roughness.

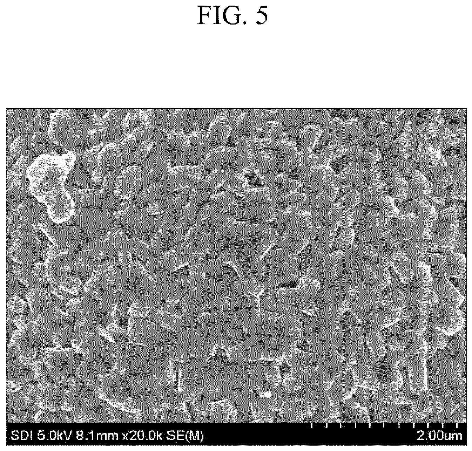

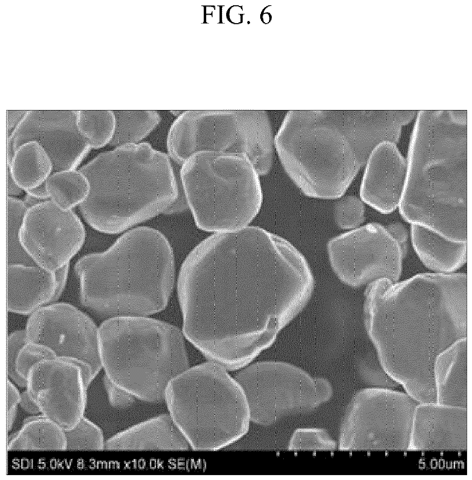

In the positive active material of Comparative Example 1, an SEM photograph of the surface of the first positive active material is shown in FIG. 5, and an SEM photograph of the second positive active material is shown in FIG. 6. Referring to FIG. 5, the first positive active material is in the form of secondary particles and exhibits no surface roughness. Referring to FIG. 6, the second positive active material is in the form of single particles and exhibits an entire smooth and flat surface.

### Evaluation Example 2: Evaluation of Surface Roughness of Positive Active Material

The positive active materials of Example 1 and Comparative Example 1 were measured with respect to surface roughness with a surface roughness measuring device using an atomic microscope (DME UHV AFM; scan speed 0.25 µm/s, non-contact mode range 250 nm x 250 nm), and the results are shown in Table 1. In Table 1, each measurement uses a unit of nm.

**(Table 1)**

| | | | Maximum roughness (Rₘₐₓ) | Average roughness (Rₐ) | Root mean square roughness (R_{q}) |
|---|---|---|---|---|---|
| Ex. 1 | First positive active material | | 63 | 3.8 | 5.3 |
| | Second positive active material | Uneven surface | 17 | 1.3 | 1.7 |
| | | Flat surface | 9 | 1.14 | 1.4 |
| Comp . Ex. 1 | First positive active material | | 63 | 3.8 | 5.3 |
| | Second positive active material | | 9 | 1.14 | 1.4 |

### Evaluation Example 3: Initial Charge/Discharge Capacity, Efficiency and Cycle-life Characteristics

The coin half-cells of Example 1 and Comparative Example 1 were charged under conditions of constant current (0.2 C) and constant voltage (4.25 V, 0.05 C cut-off) and measured with respect to charge capacity, paused for 10 minutes, and discharged to 3.0 V under a condition of constant current (0.2 C) and measured with respect to discharge capacity. A ratio of the discharge capacity to the charge capacity is shown as efficiency. The results are shown in Table 2.

In addition, the cells were repeatedly 50 times charged and discharged at 45 °C after the initial charge and discharge and measured with respect to a ratio (%) of 50^{th} discharge capacity to the initial discharge capacity as capacity retention, that is, cycle-life characteristics, which are shown in Table 2.

**(Table 2)**

| | Charge capacity (mAh/g) | Discharge capacity (mAh/g) | Charge/dischar ge efficiency (%) | 50 cycle capacity retention (%, 45 °C) |
|---|---|---|---|---|
| Example 1 | 237.9 | 209.4 | 88.0 | 97.1 |
| Comparative Example 1 | 237.0 | 208.3 | 87.9 | 93.8 |

Referring to Table 2, the cell of Example 1 exhibits improved initial charge capacity, initial discharge capacity, and initial charge and discharge capacity and thus improved cycle-life characteristics, compared with the cell of Comparative Example 1.

Since both the first positive active material and the second positive active material are coated with the boron-containing compound, but the boron-containing compound is effectively coated on a portion of the second positive active material in the form of single particles and thus increases a specific surface area and the like due to an uneven surface, when this positive active material is applied to a battery, characteristics such as initial charge/discharge efficiency, cycle-life, and the like are improved.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of Symbols>

| | |
|---|---|
| 100: rechargeable lithium battery | 112: negative electrode |
| 113: separator | 114: positive electrode |
| 120: battery case | 140: sealing member |

## Claims

1. A positive active material for a rechargeable lithium battery, comprising
a first positive active material including a lithium nickel-based composite oxide and including a secondary particle in which a plurality of primary particles are aggregated and a boron coating portion on the surface of the secondary particle, and
a second positive active material including a lithium nickel-based composite oxide and including a single particle and a boron coating portion on the surface of the single particle,
wherein the second positive active material has an uneven surface with irregularities and a flat surface without irregularities.

2. The positive active material of claim 1, wherein
the boron coating portion includes a boron-containing compound, and
the boron-containing compound includes boron oxide, lithium borate, or a combination thereof, optionally wherein
the boron-containing compound includes B₂O₂, B₂O₃, B₄O₃, B₄O₅, LiBO₂, Li₃B₇O₁₂, Li₆B₄O₉, Li₃B₁₁O₁₈, Li₂B₄O₇, Li₃BO₃, or a combination thereof.

3. The positive active material of claim 1 or claim 2, wherein
a boron content relative to the total content of elements other than lithium and oxygen in the entire positive active material for a rechargeable lithium battery is 0.01 wt% to 3 wt%.

4. The positive active material of any one of claims 1 to 3, wherein
the uneven surface of the second positive active material has a maximum roughness (Rₘₐₓ; peak to peak height) of greater than or equal to 15 nm.

5. The positive active material of any one of claims 1 to 4, wherein
the uneven surface of the second positive active material has an average roughness (Rₐ) of greater than or equal to 1.2 nm and a root mean square roughness (R_{q}) of greater than or equal to 1.5 nm.

6. The positive active material of any one of claims 1 to 5, wherein
the flat surface of the second positive active material has a maximum roughness (Rₘₐₓ) of less than or equal to 14 nm.

7. The positive active material of any one of claims 1 to 6, wherein:
(i) the flat surface of the second positive active material has an average roughness (Rₐ) of less than 1.2 nm and a root mean square roughness (R_{q}) of less than 1.5 nm; and/or
(ii) a ratio of the uneven surface to the total surface area of the second positive active material is 40% to 80%.

8. The positive active material of any one of claims 1 to 7, wherein:
(i) the positive active material for the rechargeable lithium battery including the first positive active material and the second positive active material has a BET specific surface area of 0.2 m²/g to 0.6 m²/g; and/or
(ii) an average particle diameter of the first positive active material is 5 µm to 25 µm, and
an average particle diameter of the second positive active material is 1 µm to 8 µm.

9. The positive active material of any one of claims 1 to 8, wherein:
(i) the first positive active material is included in an amount of 50 wt% to 90 wt%, and the second positive active material is included in an amount of 10 wt% to 50 wt% based on the total amount of the first positive active material and the second positive active material; and/or
(ii) the first positive active material includes a lithium nickel-based composite oxide represented by Chemical Formula 1, and
the second positive active material includes a lithium nickel-based composite oxide represented by Chemical Formula 11:
[Chemical Formula 1] Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤z1≤0.7, 0.9≤x1+y1+z1≤1.1, 0≤b1≤0.1, M¹ and M² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S,
[Chemical Formula 11] Liₐ₁₁Niₓ₁₁M¹¹_{y11}M¹²_{z11}O_{2-b11}X_{b11}
wherein, in Chemical Formula 11, 0.9≤a11≤1.8, 0.3≤x11≤1, 0≤y11≤0.7, 0≤z11≤0.7, 0.9≤x11+y11+z11≤1.1, 0≤b11≤0.1, M¹¹ and M¹² are each independently at least one element selected from Al, B, Ba, Ca, Ce, Co, Cr, Cu, Fe, Mg, Mn, Mo, Nb, Si, Sr, Ti, V, W, and Zr, and X is at least one element selected from F, P, and S.

10. A method for producing a positive active material for a rechargeable lithium battery, comprising
preparing a first nickel-based oxide in a form of a secondary particle in which a plurality of primary particles are aggregated by mixing a first nickel-based hydroxide and a lithium raw material and performing a first heat treatment;
preparing a second nickel-based oxide in a form of a single particle by mixing a second nickel-based hydroxide and a lithium raw material and performing a second heat treatment; and
mixing the first nickel-based oxide, the second nickel-based oxide, and a boron raw material and subjecting to a third heat treatment.

11. The method of claim 10, wherein:
(i) the first nickel-based hydroxide and the second nickel-based hydroxide are each independently represented by Chemical Formula 21:
[Chemical Formula 21] Niₓ₂₁M²¹_{y21}M²²_{z21}(OH)₂
wherein, in Chemical Formula 21, 0.3≤x21≤1, 0≤y21≤0.7, 0≤z21≤0.7, 0.9≤x21+y21+z21≤1.1, and M²¹ and M²² are each independently at least one element selected from Al, B, Ba, Ca, Ce, Co, Cr, Cu, F, Fe, Mg, Mn, Mo, Nb, P, S, Si, Sr, Ti, V, W, and Zr; and/or
(ii) in the mixing the first nickel-based hydroxide and the lithium raw material, a ratio of the number of moles of lithium in the lithium raw material to the number of moles of metal in the first nickel-based hydroxide is greater than or equal to 0.9 and less than or equal to 1.2, and
in the mixing the second nickel-based hydroxide and the lithium raw material, a ratio of the number of moles of lithium in the lithium raw material to the number of moles of metal in the second nickel-based hydroxide is greater than or equal to 0.9 and less than or equal to 1.2.

12. The method of claim 10 or claim 11, wherein:
(i) the first heat treatment is performed at a temperature range of 600 °C to 900 °C for 5 hours to 20 hours; and/or
(ii) the preparing of the second nickel-based oxide includes a second heat treatment at 800 °C to 1100 °C for 5 hours to 20 hours and pulverization.

13. The method of any one of claims 10 to 12, wherein:
(i) the mixing of the first nickel-based oxide and the second nickel-based oxide is performed such that a weight ratio of the first nickel-based oxide and the second nickel-based oxide is 9:1 to 5:5; and/or
(ii) the mixing of the first nickel-based oxide, the second nickel-based oxide, and the boron raw material is performed such that boron included in the boron raw material is mixed to be 0.01 to 3 parts by mole when the total content of metals other than lithium in the first nickel-based oxide and the second nickel-based oxide is 100 parts by mole.

14. The method of any one of claims 10 to 13, wherein
the third heat treatment is performed at a temperature range of 650 °C to 900 ° C for 5 hours to 30 hours.

15. A rechargeable lithium battery, comprising
a positive electrode including the positive active material of any one of claims 1 to 9, a negative electrode, and an electrolyte.
